# EUROPÄISCHE PATENTSCHRIFT

(11) **EP 3 593 438 B1**
(45) Veröffentlichungstag und Bekanntmachung des Hinweises auf die Patenterteilung: **02.03.2022**
(21) Anmeldenummer: 18710425.2
(22) Anmeldetag: 07.03.2018
(51) Int. Cl.: H02J 7/14, B60W 30/18

(54) **BORDNETZSTABILISIERUNGSVORRICHTUNG FÜR EIN FAHRZEUG**
ON-BOARD POWER SUPPLY STABILISATION DEVICE FOR A VEHICLE
DISPOSITIF DE STABILISATION DU RÉSEAU DE BORD POUR UN VÉHICULE

(30) Priorität: 08.03.2017 DE 102017203771
(43) Veröffentlichungstag der Anmeldung: 15.01.2020
(73) Patentinhaber: Vitesco Technologies GmbH, 93055 Regensburg (DE)
(72) Erfinder: HUBER, Tobias, 93161 Sinzing (DE); KNORR, Rainer, 93055 Regensburg (DE)
(74) Vertreter: Vitesco Technologies
(86) Internationale Anmeldenummer: PCT/EP2018/055677
(87) Internationale Veröffentlichungsnummer: WO 2018/162600

(56) Entgegenhaltungen:
- EP-A1- 2 390 982
- DE-A1- 10 326 399
- DE-A1- 19 931 144
- DE-A1-102008 005 307
- DE-A1-102011 082 893
- DE-A1-102015 008 005

## Beschreibung

Die Erfindung betrifft eine Vorrichtung zur Bordnetzstabilisierung eines Fahrzeugs, ein Fahrzeug mit einer Bordnetzstabilisierungsvorrichtung und ein Verfahren zur Bordnetzstabilisierung.

Gestiegenes Umweltbewusstsein und höhere Anforderungen an Verbrauch, CO₂-Ausstoß und andere Emissionen führten in den vergangenen Jahren zu neuen Fahrerassistenzsystemen und zahlreichen neuen Fahrfunktionen. Die Konstantfahrphasen rücken hierbei zunehmend in den Fokus der Entwicklung, da hier der Verbrennungsmotor an den Antriebsstrang angekoppelt ist und konstant das Fahrzeug antreibt. Ein Ansatz, um den Verbrauch in nahezu Konstantfahrphasen zu reduzieren, ist das sogenannte Segeln (Coasting). Hierbei wird der Verbrennungsmotor vom Antriebsstrang abgekoppelt und das Fahrzeug rollt aufgrund der Trägheit ohne Antrieb weiter. Zur Reduktion des Kraftstoffverbrauchs und der Emissionen wird der Verbrennungsmotor des Fahrzeugs während der Segel-Phase nur im Leerlauf betrieben. Dieser Modus wird auch als Leerlaufsegeln (Idle-Coasting) bezeichnet. Eine durchschnittliche Segelphase dauert ca. 12 bis 15 Sekunden. Während dieser Zeit kann es vorkommen, dass der Generator und die Batterie das Bordnetz des Fahrzeugs gemeinsam versorgen müssen.

Die DE 10 2008 005 307 A1 betrifft ein elektrisches Energiebordnetz für eine Fahrzeug, bei dem zwei Energiewandler vorgesehen sind. Bei Detektion eines Defekts bei einer der beiden Energiewandlerquellen können elektrische Verbraucher deaktiviert werden und/oder die Drehzahl der Brennkraftmaschine erhöht werden.

Aus der DE 10 2011 082 893 A1 ist ein Segelschleppbetrieb bekannt, bei dem der Verbrennungsmotor durch ein mit Schlupf betreibbares Kupplungselement bei Schubabschaltung geschleppt wird. Dabei sollen aufwändige Stützmaßnahmen des Bordnetzes verzichtbar sein.

Eine Überwachungseinheit zur Überwachung einer Batterie mit elektrischen Verbrauchern in einem Bordnetz ist aus der DE 103 26 399 A1 bekannt. DE19931144 offenbart ein Verfahren zum Betreiben eines elektrischen Fahrzeug-Bordnetzes, mit einem durch eine Antriebsmaschine des Fahrzeuges antreibbaren Generator zum Laden einer Batterie und zum Speisen von elektrischen Verbrauchern, umfassend eine Erhöhung der Leerlaufdrehzahl bei aktivem Generator, falls der Bordnetzzustand einen Grenzwert unterschreitet und die Motordrehzahl unter einem oberen Leerlaufbereich liegt.

Es ist die Aufgabe der Erfindung, das Bordnetz eines Fahrzeugs zu stabilisieren.

Diese Aufgabe wird durch die Merkmale der unabhängigen Ansprüche gelöst. Weiterbildungen der Erfindung ergeben sich aus den Unteransprüchen und der folgenden Beschreibung von Ausführungsformen.

Ein erster Aspekt der Erfindung betrifft eine Bordnetzstabilisierungsvorrichtung für ein Fahrzeug. Das Fahrzeug weist eine Fahrzeugbatterie und einen Verbrennungsmotor auf. Die erfindungsgemäße Bordnetzstabilisierungsvorrichtung weist einen elektrischen Energiespeicher zum Versorgen des Bordnetzes mit elektrischer Energie, eine Sensoreinrichtung zum Detektieren eines Spannungseinbruchs im Bordnetz und eine Steuereinheit zum Hochregeln einer Drehzahl eines Verbrennungsmotors des Fahrzeugs auf. Das Hochregeln des Verbrennungsmotors des Fahrzeugs dient der Stabilisierung des Bordnetzes des Fahrzeuges, wenn während eines Leerlaufsegelzustandes des Fahrzeugs, in dem das Bordnetz des Fahrzeuges durch einen vom Verbrennungsmotor angetriebenen Generator und die Fahrzeugbatterie gespeist wird, ein Spannungseinbruch aufgrund eines Ausfalls der Fahrzeugbatterie oder einer Trennung der Fahrzeugbatterie vom Bordnetz detektiert wurde und die vom Bordnetz geforderte Leistung größer ist als die durch einen Generator gelieferte Leistung. Die Bordnetzstabilisierungsvorrichtung ist außerdem eingerichtet, Energie aus dem elektrischen Energiespeicher in das Bordnetz einzuspeisen bis die Drehzahl des Verbrennungsmotors erhöht wurde.

Die elektrische Energiespeichereinrichtung der Bordnetzstabilisierungsvorrichtung ist insbesondere eine von der Fahrzeugbatterie verschiedene Energiespeichereinrichtung. Sie ist vorzugsweise eingerichtet, das Bordnetz kurzfristig zu speisen bzw. zu stützen.

Die Erfindung kann als elektrische Energiespeichereinrichtung beispielsweise ein Voltage Stabilization System (VSS)als Regelkomponente bei einem Spannungseinbruch im Bordnetz bei einer aktiven Leerlaufsegel-Phase (Idle-Coasting, MotorAn Segeln) nutzen. Durch die erfindungsgemäße Bordnetzstabilisierungsvorrichtung wird eine Lösung bereitgestellt, die es ermöglichen kann, einen gewünschten ASIL Level (Automotive Safety Integrity Level gemäß ISO 26262) für die Fahrfunktion Leerlaufsegeln (Verbrennungsmotor im Leerlauf bei geöffneter Kupplung) zu erreichen. Hierbei wurde insbesondere der kritische Fall betrachtet, dass die Fahrzeugbatterie (z.B. 12V oder 48V) ausfällt oder vom Bordnetz getrennt wird. Um einen sicheren Betrieb des Fahrzeugs zu gewährleisten, darf dies nicht dazu führen, dass das gesamte Bordnetz zusammenbricht. Eine genauere Beschreibung eines 12V Bordnetzes kann der Norm LV 124 entnommen werden.

Befindet sich das Fahrzeug im Leerlaufsegeln, kann sich für den Generator aufgrund der geringen Drehzahl des Verbrennungsmotors und damit auch eine geringere Drehzahl des Generators ein limitierender Zustand einstellen, d.h. der Generator kann nicht seine Nennleistung erzeugen. Der Generator kann über einen Riemen oder direkt mit dem Verbrennungsmotor gekoppelt sein, z.B. mit einem Übersetzungsverhältnis von 2,5:1 - 3:1. Die Leerlaufdrehzahl des Verbrennungsmotors kann z.B. bei 600 - 900 1/min liegen. Somit hat der Generator eine Drehzahl von beispielsweise 1.500 bis 2.700 1/min. Die Leerlaufdrehzahl des Verbrennungsmotors beim Leerlaufsegeln kann sich von der Leerlaufdrehzahl im Stand unterscheiden bzw. die Leerlaufdrehzahl kann den Umgebungsbedingungen angepasst werden. Des Weiteren kann der Verbrennungsmotor während des Segelns auch eine andere, beliebige Drehzahl aufweisen.

Erfolgt das Segeln bei Leerlaufdrehzahl, kann der Generator eine durchschnittliche Maximalleistung von z.B. 750 - 1000 W bereitstellen. Der Bordnetzbedarf kann höher sein und somit wird die benötigte Leistung vom Generator und der Batterie parallel zur Verfügung gestellt, um das Bordnetz des Fahrzeugs zu versorgen. Bei einem Ausfall der Batterie kann der Generator das Bordnetz nicht alleine versorgen und somit kann die Bordnetzspannung einbrechen bzw. zusammenbrechen.

Eine Lösung hierfür wäre, den Verbrennungsmotor im Leerlaufsegeln mit einer Drehzahl oberhalb der Leerlaufdrehzahl (Idle Speed) zu betreiben. Hierdurch könnte der Generator mehr Leistung bereitstellen - gegebenenfalls mehr als aktuell von den elektrischen Verbrauchern benötigt wird. Jedoch würde dabei mehr Kraftstoff für die erhöhte Drehzahl benötigt, was sich negativ auf die Gesamt-CO₂-Bilanz auswirkt. Aktuelle Anforderungen der Automobilhersteller verlangen einen möglichst geringen Kraftstoffverbrauch während des Leerlaufsegelns, der beispielsweise 0,4 l/h nicht übersteigen sollte.

Mit der erfindungsgemäßen Bordnetzstabilisierungsvorrichtung kann ein Ausfall der Batterie und Einbruch der Bordnetzspannung während des Leerlaufsegelns durch die Sensoranordnung erkannt werden. Die Bordnetzstabilisierungsvorrichtung kann daraufhin die gespeicherte Energie in dem Energiespeicher, z.B. einem DLC-Speicher, verwenden, um diese Energie in das Bordnetz einzuspeisen und auf eine bestimmte Spannung (Set Point 1) im Bordnetz zu regeln. Dies bedeutet, dass die Spannung über einem Niveau von z.B. >10 V gehalten wird. Somit können die im Bordnetz befindlichen Komponenten versorgt werden.

Ein Spannungseinbruch im Bordnetz kann insbesondere dann Auftreten, wenn die Verbraucherlast größer ist, als die aufgebrachte Generatorleistung (P_{Last} > P_{Gen}). Wurde auf eine bestimmte Spannung geregelt, so wird dem Generator ermöglicht, den Erregerstrom für die gestiegene Leistungsanforderung zu erhöhen. Gleichzeitig wird während der Erregerstromerhöhung die Leerlaufsegeln-Funktion deaktiviert. Somit wird der Verbrennungsmotor wieder an den Antriebsstrang angekoppelt und hochgeschleppt, sodass der Generator über die höhere Drehzahl mehr Leistung bereitstellen kann. Die Drehzahl des Verbrennungsmotors wird vorzugsweise so weit erhöht, dass der Generator eine ausreichende Leistung bereitstellt um das Bordnetz allein zu versorgen. Dieser Vorgang kann z.B. 1 bis 2 Sekunden dauern. In dieser Zeit stützt der Energiespeicher der Bordnetzstabilisierungsvorrichtung vorzugsweise über einen DC/DC-Wandler (welcher ein Teil der Bordnetzstabilisierungsvorrichtung sein kann) das Bordnetz. Es wird sichergestellt, dass die Spannung in einem vertretbaren Bereich gehalten wird. Somit können Ausfälle von Steuergeräten vermieden werden.

Die Bordnetzstabilisierungsvorrichtung ist im Spannungsregelkreis mit der Batterie und dem Generator eingebunden. Die Batterie, der Generator und die Bordnetzstabilisierungsvorrichtung stellen sicher, dass Spannungseinbrüche, z.B. beim Motorstart, vermieden bzw. reduziert werden. Die Fahrzeugbatterie bzw. das Bordnetz des Fahrzeugs kann beispielsweise 12 V, 24 V, 48 V oder auch Hochspannung aufweisen. Je nach Spannungsebene des Bordnetzes können die Energiespeicher ausgelegt bzw. angepasst werden. Das heißt, der Energiespeicher der Bordnetzstabilisierungsvorrichtung kann abhängig von der Spannungsebene gewählt und/oder geändert werden.

Zu Beginn des Betriebs der Bordnetzstabilisierungsvorrichtung kann sich der Verbrennungsmotor des Fahrzeugs für einen niedrigen Verbrauch während der Segelphase im Leerlauf befinden. Im Leerlauf liegt typischerweise ein niedriger Verbrauch vor, da der Motor nur seine innere Reibung überwinden muss. Ausgenommen hiervon sind die sich direkt am Verbrennungsmotor befindlichen Anbauteile bzw. Komponenten, wie z.B. Klimakompressor, Generator, Riemenspanner, Ventiltrieb usw. Im Betrieb des Verbrennungsmotors mit Leerlaufdrehzahl kann es unter Umständen vorkommen, dass der Generator nicht mehr die geforderte elektrische Leistung bereitstellen kann, welche aktuell vom Bordnetz benötigt wird. Somit kann die Leerlaufdrehzahl des Verbrennungsmotors in der Segelphase angehoben werden. Mit dem Einsatz einer erfindungsgemäßen Bordnetzstabilisierungsvorrichtung kann mit einer reduzierten Leerlaufdrehzahl während des Segelns gefahren werden, ohne dass die Gefahr eines Spannungseinbruchs im Bordnetz besteht. Die Bordnetzstabilisierungsvorrichtung kann bei einem Ausfall der Batterie das Bordnetz kurzfristig (im Sekundenbereich) stützen, bis der Verbrennungsmotor auf eine höhere Drehzahl hochgeregelt wurde und der Generator anschließend das Bordnetz wieder selbständig versorgen kann.

Zur Reduzierung des Verbrauchs in den Leerlaufsegel-Phasen kann der Verbrennungsmotor eine Leerlaufdrehzahl von unter 700 1/min aufweisen. Bei dieser niedrigen Drehzahl kann der Generator unter Umständen nicht den Bordnetzbedarf des Fahrzeugs decken, hier kann das vorhergehend und nachfolgend beschriebene erfindungsgemäße Bordnetzstabilisierungssystem eingesetzt werden. Somit ermöglicht das Bordnetzstabilisierungssystem besonders niedrige Drehzahlen während des Leerlaufsegelns und somit auch einen besonders niedrigen Kraftstoffverbrauch des Fahrzeugs in den Segelphasen. Dies kann zur Verbesserung der Gesamt-CO₂-Bilanz des Fahrzeugs beitragen.

Der Energiespeicher der Bordnetzstabilisierungsvorrichtung ist erfindungsgemäß ausgeführt, bei einem drohenden Einbruch des Bordnetzes eine Bezugsspannung für die Generatorregelung bereitzustellen. Hierdurch kann dem Generator eine feste Bezugsgröße (Sollspannung) für dessen Regelung bereitgestellt werden. Somit kann die Generatorregelung den Erregerstrom einstellen.

Die Bezugsspannung, welche von dem Energiespeicher der Bordnetzstabilisierungsvorrichtung für die Generatorreglung zur Verfügung gestellt wird kann beispielsweise zwischen 10 V und 16 V oder zwischen 12 V und 16 V liegen. In diesem Spannungsbereich kann auch der Generator arbeiten und das Bordnetz stützen.

Erfindungsgemäß speist die Bordnetzstabilisierungsvorrichtung nach Beginn ihres Betriebs Energie in das Bordnetz ein, bis die Drehzahl des Verbrennungsmotors durch die Motorsteuerung erhöht wurde, um eine höhere Leistung durch den Generator zu erzeugen. Sobald die Bordnetzstabilisierungsvorrichtung damit beginnt das Bordnetz zu stützen, kann das Steuergerät der Bordnetzstabilisierungsvorrichtung veranlassen, dass die Drehzahl des Verbrennungsmotors angehoben wird. Das Steuergerät der Bordnetzstabilisierungsvorrichtung kann direkten Zugriff auf die Motordrehzahlsteuerung haben, um schnell auf Spannungseinbrüche reagieren zu können. Die Drehzahl des Verbrennungsmotors und die Drehzahl des Generators verhalten sich linear zueinander, da ein konstantes Übersetzungsverhältnis vorliegt. Des Weiteren verhalten sich die Drehzahl des Generators und die Generatorleistung bis zu einer Drehzahl von ca. 4000 U/min nahezu proportional. Das heißt mit steigender Generatordrehzahl kann der Generator mehr Leistung bereitstellen. Dadurch, dass das Steuergerät der Bordnetzstabilisierungsvorrichtung die Spannung des Bordnetzes stabilisiert, kann die Motorsteuerung die Drehzahl des Verbrennungsmotors mit dem Beginn der Stützung des Bordnetzes hochregeln wodurch der Generator wieder mehr Leistung abgeben kann. Dadurch kann ein verhältnismäßig kleiner Energiespeicher zum Einsatz kommen, um das Bordnetz kurzzeitig zu stützen.

Eine Ausführungsform der Erfindung sieht vor, dass der Energiespeicher einen Kondensator aufweist. Zur kurzfristigen Bereitstellung einer hohen Leistung kann sich ein Kondensator eignen. Die Bordnetzstabilisierungsvorrichtung kann verschiedene Kondensatortypen vorsehen. Hierbei sind insbesondere Elektrolytkondensatoren (Elko), Doppelschichtkondensatoren (DLC), SuperCap-Kondensatoren und UltraCap-Kondensatoren zu nennen. Des Weiteren sei angemerkt, dass anstatt eines Kondensators auch zwei oder mehrere Kondensatoren in Reihe und/oder parallel geschaltet werden können, um eine Kondensatoranordnung zu erhalten. Die Kondensatoranordnung kann Vorteile hinsichtlich des Bauraums, des Preises und der Ausfallsicherheit der einzelnen Komponenten aufweisen.

Für die Stützung des Bordnetzes von 1 bis 2 Sekunden kann der Kondensator eine Kapazität von wenigstens 600 F aufweisen. Diese Kapazität kann ausreichend sein, um das Bordnetz eines Fahrzeugs, z.B. über 1 bis 2 Sekunden mit beispielsweise 300 W zu stützen. Diese kurzfristige Bordnetzunterstützung durch einen Kondensator kann ausreichend sein, um den Verbrennungsmotor und den damit verbundenen Generator auf eine Drehzahl hochzuregeln, mit welcher der Generator das Bordnetz des Fahrzeugs selbständig versorgen kann.

Eine Ausführungsform der Erfindung sieht vor, dass der Energiespeicher wenigstens einen Akkumulator aufweist, welcher beispielsweise eine Gesamtspannung von wenigstens 2 V aufweist. Neben einem Kondensator kann der Energiespeicher auch einen Akkumulator aufweisen. Auch können mehrere Akkumulatoren in Reihe oder parallel in dem Energiespeicher vorhanden sein. Vorteilhafterweise weist der Akkumulator bzw. die Akkumulatoren eine Spannung von wenigstens 2 V auf.

Damit das Bordnetz des Fahrzeugs hinreichend gestützt werden kann, ist es vorteilhaft wenn der Energieinhalt des Energiespeichers wenigstens ausreicht, um das Bordnetz bis zum Hochregeln des Generators zu stützen. Der Energiespeicher kann z.B. einen Energieinhalt von 2 Wh oder mehr aufweisen.

Ein weiterer Aspekt der Erfindung betrifft ein Verfahren zur Bordnetzstabilisierung eines Fahrzeuges in einer Leerlaufsegelphase, wobei ein Verbrennungsmotor des Fahrzeuges von einem Antriebsstrang des Fahrzeuges abgekuppelt ist und mit einer Drehzahl betrieben wird. Die Drehzahl ist beispielsweise eine Leerlaufdrehzahl. Das Bordnetz des Fahrzeuges wird durch einen vom Verbrennungsmotor angetriebenen Generator und eine Fahrzeugbatterie gespeist.

Das Verfahren umfasst folgende Schritte:
- Detektieren eines Spannungseinbruchs im Bordnetz aufgrund eines Ausfalls der Fahrzeugbatterie oder einer Trennung der Fahrzeugbatterie vom Bordnetz durch eine Sensoranordnung;
- Einspeisen von in einem elektrischen Energiespeicher gespeicherter elektrischer Energie in das Bordnetz bis die Drehzahl des Verbrennungsmotors so weit erhöht wurde, dass der Generator eine ausreichende Drehzahl hat, um das Bordnetz allein zu versorgen, und Vorgabe einer Bezugsspannung für eine Regelung des Generators; und
- Erhöhen der Drehzahl des Verbrennungsmotors, um eine höhere Leistung durch den Generator bereitzustellen.

Eine vorteilhafte Ausführungsvariante des Verfahrens zur Bordnetzstabilisierung wird im Folgenden beschrieben.
1. Ein Fahrzeug befindet sich z.B. in einer Leerlaufsegel-Phase (Kupplung offen, Verbrennungsmotor bei ca. 600 - 900 U/min). Die Bordnetzlast der Verbraucher ist größer als die erzeugte Leistung eines Generators. Somit wird zusätzliche Leistung zur Bordnetzversorgung von einer Batterie benötigt.
2. Die Batterie wird vom übrigen Bordnetz über einen Fehlerfall getrennt. Dieser Defekt kann auf einen mechanischen wie auch elektrischen Fehlerfall zurückzuführen sein. Durch den Wegfall der Batterie kann die Spannung des Bordnetzes einbrechen.
3. Eine Sensoranordnung der Bordnetzstabilisierungsvorrichtung erkennt den Fehlerfall der Batterie und/oder das Gesamtsystem erkennt den Fehlerfall der Batterie.
3.a) Die Bordnetzstabilisierungsvorrichtung wird aktiviert und gibt die im Energiespeicher gespeicherte Energie an das Bordnetz ab. Das Bordnetz wird dadurch mit einer zusätzlichen Leistung von z.B. 300 W gestützt. Hieraus kann eine Stabilisierung der Bordnetzspannung folgen, wobei die Spannung auf einen bestimmten Punkt geregelt werden kann (Set Point 1).
3.b) Der Generator erhöht die Generatorerregung über eine Steuereinheit und gleichzeitig wird die Leerlaufsegel-Funktion deaktiviert (Drehzahl des Generators wird über die Verbrennerdrehzahl erhöht), was dazu führt, dass der Generator eine höhere Leistung bereitstellen kann.
4. Der Generator hat eine höhere Leistungsfähigkeit erreicht und regelt die Spannung auf ein bestimmtes Niveau z.B. 13 V, der Energiespeicher der Bordnetzstabilisierungsvorrichtung kann wieder vom Bordnetz getrennt werden bzw. aufgeladen werden.

Die Drehzahl des Verbrennungsmotors wird erfindungsgemäß so weit erhöht, bis der Generator wieder eine ausreichende Drehzahl hat um das Bordnetz allein zu versorgen.

Gemäß einer vorteilhaften Weiterbildung des Verfahrens zur Bordnetzstabilisierung eines Fahrzeuges ist die Drehzahl zu Beginn des Verfahrens in der Leerlaufsegel-Phase eine Leerlaufdrehzahl. Die Drehzahl wird im Laufe des Verfahrens erhöht, beispielsweise indem das Leerlaufsegeln beendet wird. Somit kann der Verbrennungsmotor hochgeschleppt werden. Gemäß einer vorteilhaften Variante des Verfahrens wird daher in einem weiteren Schritt das Leerlaufsegeln beendet, wenn ein Spannungseinbruch im Bordnetz detektiert wurde.

Gemäß einer vorteilhaften Variante des Verfahrens werden außerdem variable Lasten im Bordnetz reduziert, wenn ein Spannungseinbruch im Bordnetz detektiert wurde. Damit können Verbraucher, welche zum sicheren Betrieb des Fahrzeuges nicht unbedingt notwendig sind, zumindest temporär abgeschaltet werden.

Ein weiterer Aspekt der Erfindung ist ein Computerprogrammelement, das, wenn es auf einem Steuergerät eines Fahrzeugs ausgeführt wird, das Fahrzeug anleitet, das erfindungsgemäße Verfahren durchzuführen, sowie ein computerlesbares Medium, auf dem ein solches Programmelement gespeichert ist.

Ein weiterer Aspekt dieser Erfindung betrifft ein Fahrzeug mit einer oben und im Folgenden beschriebenen Bordnetzstabilisierungsvorrichtung bzw. mit einer Steuereinheit mit einer Prozessoreinrichtung, die dazu eingerichtet ist, das erfindungsgemäße Verfahren durchzuführen.

Bei dem Fahrzeug handelt es sich beispielsweise um ein Kraftfahrzeug, wie ein Auto, ein Bus oder Lastkraftwagen, oder aber auch um ein Schienenfahrzeug, ein Schiff oder ein Luftfahrzeug, wie etwa einen Helikopter oder ein Flugzeug.

Weitere Merkmale, Vorteile und Anwendungsmöglichkeiten der Erfindung ergeben sich aus der nachfolgenden Beschreibung der Ausführungsbeispiele und Figuren. Die Figuren sind schematisch und nicht maßstabsgetreu. Sind in der nachfolgenden Beschreibung in verschiedenen Figuren die gleichen Bezugszeichen angegeben, so bezeichnen dieses gleiche oder ähnliche Elemente.
- Fig. 1: zeigt einen schematischen Schaltplan eines Fahrzeugbordnetzes mit einer Bordnetzstabilisierungsvorrichtung, sowie ein Diagramm des zeitlichen Spannungsverlaufs des Bordnetzes.
- Fig. 2: zeigt ein Diagramm, in welchem der Generatorstrom über der Generatordrehzahl aufgetragen ist.
- Fig. 3: zeigt ein Diagramm des zeitlichen Verlaufs einer Segelphase. Es werden sowohl die Motordrehzahl als auch die Geschwindigkeit des Fahrzeugs über der Zeit dargestellt.
- Fig. 4: zeigt ein Flussdiagramm eines Verfahrens zur Bordnetzstabilisierung gemäß einer Ausführungsform der Erfindung.
- Fig. 5: zeigt ein Fahrzeug mit einer Bordnetzstabilisierungsvorrichtung gemäß einer Ausführungsform der Erfindung.

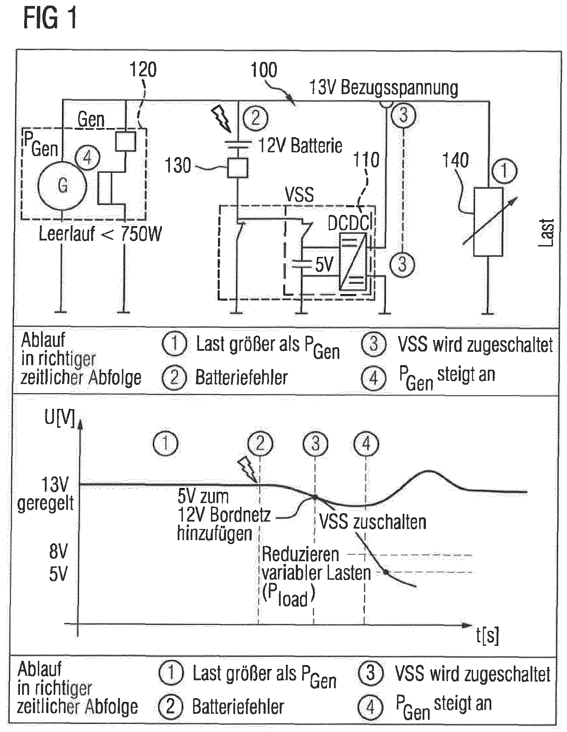

Fig. 1 zeigt einen Schaltplan mit einer integrierten Bordnetzstabilisierungsvorrichtung 100, sowie den Spannungsverlauf im Fehlerfall mit einer integrierten Bordnetzstabilisierungsvorrichtung 100. Die Bordnetzstabilisierungsvorrichtung 100 umfasst einen Energiespeicher (VSS) 110, eine Sensoranordnung 130 und eine Steuereinheit. Die Sensoranordnung 130 kann einen Spannungseinbruch des Bordnetzes detektieren. Daraufhin veranlasst die Steuereinheit, dass der Energiespeicher 110 das Bordnetz stützt und der Verbrennungsmotor hochgeregelt wird, sodass der Generator eine höhere Leistung erzeugen kann.

Zum besseren Verständnis der Problemstellung wird nachfolgend zuerst der normale Fall beschrieben. Anschließend wird der Fehlerfall, auf welchen die Bordnetzstabilisierungsvorrichtung 100 gerichtet ist, erläutert.

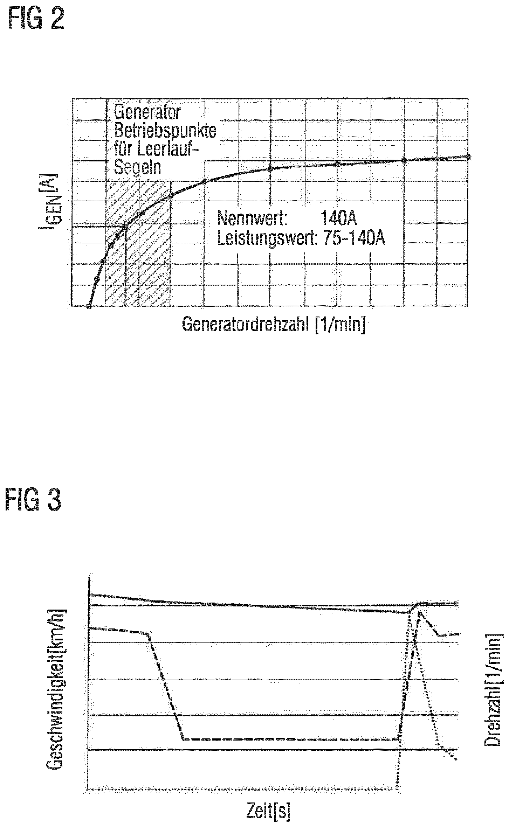

Im normalen Fahrbetrieb erzeugt der Generator 120 Strom und versorgt das Bordnetz des Fahrzeugs, d.h. alle im Bordnetz des Fahrzeugs vorhandenen Komponenten. Des Weiteren kann die Fahrzeugbatterie geladen werden. Die Batterie dient insbesondere dem Abpuffern von Stromspitzen im Bordnetz, welche nicht durch den Generator 120 gedeckt werden können. In diesem Fall ist der Bordnetzbedarf des Fahrzeugs größer als durch den Generator 120 erzeugt werden kann. Während des Leerlaufsegelns wird der Verbrennungsmotor vom Antriebsstrang abgekoppelt und mit Leerlaufdrehzahl betrieben, um Kraftstoff einzusparen. Dadurch, dass der Verbrennungsmotor und der Generator 120 mit einem festen Übersetzungsverhältnis verbunden sind (typischerweise 2,5 bis 3), ist auch die Drehzahl des Generators 120 niedrig. Durch die niedrige Drehzahl des Generators 120 kann dieser nicht seine Nennleistung erzeugen (siehe Fig. 2). Im Normalfall würde die Batterie die restliche benötigte Leistung dem Bordnetz zur Verfügung stellen. Bei einem Ausfall der Batterie kann jedoch der Bordnetzbedarf nicht mehr gedeckt werden und die Spannung des Bordnetzes würde zusammenbrechen. Eine Gegenmaßnahme wäre, die Leerlaufdrehzahl des Verbrennungsmotors dauerhaft anzuheben bzw. die Leerlaufdrehzahl während des Segelns anzuheben, sodass der Generator 120 mehr Strom erzeugen kann. Jedoch würde dies zu einem erhöhten Kraftstoffverbrauch in den Segelphasen führen. Eine selektive Anhebung der Drehzahl im Fehlerfall ist nicht schnell genug möglich, um einen Einbruch der Bordnetzspannung zu vermeiden. Für den oben beschriebenen Fehlerfall ist die Bordnetzstabilisierungsvorrichtung 100 gedacht. Sobald das Bordnetz droht zusammenzubrechen, springt die Bordnetzstabilisierungsvorrichtung 100 ein und stützt das Bordnetz kurzfristig, bis die Drehzahl des Generators 120 erhöht wurde und der Generator 120 das Bordnetz wieder alleine versorgen kann. Der Spannungsverlauf des Bordnetzes ist im unteren Bereich von Fig. 1 dargestellt.

In Phase 1 herrscht der Regelfall und das Bordnetz ist stabil, also der Generator 120 und die Batterie können das Bordnetz versorgen.

In Phase 2 fällt die Batterie aus und die Spannung beginnt einzubrechen, da die Last 140 größer ist als die durch den Generator 120 erzeugte Leistung. Ohne die Bordnetzstabilisierungsvorrichtung 100 könnte das Bordnetz zusammenbrechen. Der Spannungseinbruch kann durch die Sensoranordnung 130 detektiert werden.

In Phase 3 wird die Bordnetzstabilisierungsvorrichtung 100 aktiviert, wodurch das Bordnetz gestützt wird und die Spannung konstant gehalten werden kann.

In Phase 4 wird die Drehzahl des Generators 120 erhöht, dadurch kann dieser eine höhere Leistung erzeugen und der Generator 120 kann das Bordnetz wieder alleine versorgen.

Fig. 2 zeigt ein Diagramm, auf welchem der Generatorstrom über der Generatordrehzahl aufgetragen ist. In diesem Beispiel handelt es sich um einen Generator, welcher einen Nennwert von 140 A aufweist. Aus dem Diagramm wird weiter ersichtlich, dass der durch den Generator erzeugbare Strom von der Drehzahl des Generators und somit auch von der Drehzahl des Verbrennungsmotors abhängt. Die Übersetzung zwischen Motordrehzahl und Generatordrehzahl ist typischerweise in einem Bereich von 2,5 bis 3. Je höher die Drehzahl des Motors, desto höher ist die erzeugbare Leistung durch den Generator. Hierbei wird auch ersichtlich, wie das zu lösende Problem entsteht. In einem niedrigen Generatordrehzahlbereich von z.B. 1500 1/min bis 2500 1/min, wie dies beim Leerlaufsegeln auftritt, ist der durch den Generator erzeugbare Strom bei ca. 75 A, d.h. die Generatorleistung ist somit bei z.B. 950 W. Die Generatorleistung in dem niedrigen Drehzahlbereich kann unter Umständen den Bordnetzbedarf nicht decken und somit kann der Ausfall der Batterie zum Spannungseinbruch des Bordnetzes führen. Durch die Anhebung der Drehzahl kann der Generator mehr Strom erzeugen und somit auch mehr Leistung bereitstellen. Diese kann ausreichend sein, um das Bordnetz des Fahrzeugs selbständig zu versorgen.

Fig. 3 zeigt ein Diagramm des zeitlichen Verlaufs einer Segelphase. In dem Diagramm werden sowohl die Motordrehzahl als auch die Fahrzeuggeschwindigkeit über der Zeit während einer Leerlaufsegel-Phase dargestellt. Die gestrichelte Linie bezieht sich hierbei auf die Motordrehzahl des Verbrennungsmotors. Zu Beginn verhält sich die Motordrehzahl linear zu der Fahrzeuggeschwindigkeit (schwarze, durchgezogene Linie). Sobald die Kupplung zwischen dem Antriebsstrang und dem Verbrennungsmotor geöffnet wird, kann die Motordrehzahl auf Leerlaufdrehzahl abgesenkt werden. Das Fahrzeug befindet sich nun in der Leerlaufsegel-Phase, da es weiter rollt, jedoch ohne Antrieb durch den Verbrennungsmotor. Dies wird durch die abfallende schwarze Linie ersichtlich, da diese die Fahrzeuggeschwindigkeit wiederspiegelt. Wenn vom Generator mehr elektrische Leistung gefordert wird, kann die Kupplung zwischen Antriebsstrang und Verbrennungsmotor geschlossen werden und der Verbrennungsmotor wird durch die Fahrzeuggeschwindigkeit wieder auf eine der Fahrzeuggeschwindigkeit entsprechende Drehzahl hochgeschleppt. Während des Hochschleppens des Verbrennungsmotors springt die Bordnetzstabilisierungsvorrichtung ein und versorgt das Bordnetz des Fahrzeugs mit Leistung. Dies wird durch die gepunktete Linie in dem Diagramm dargestellt. Mit einer höheren Motordrehzahl kann der Generator eine höhere Leistung bereitstellen und das Bordnetz versorgen. Sobald der Generator das Bordnetz des Fahrzeugs selbständig versorgen kann, stützt die Bordnetzstabilisierungsvorrichtung nicht mehr das Bordnetz. Der Vorgang zwischen der Leistungsanforderung durch das Bordnetz und der Bereitstellung der Leistung durch den Generator kann typischerweise ca. 1-2 Sekunden betragen.

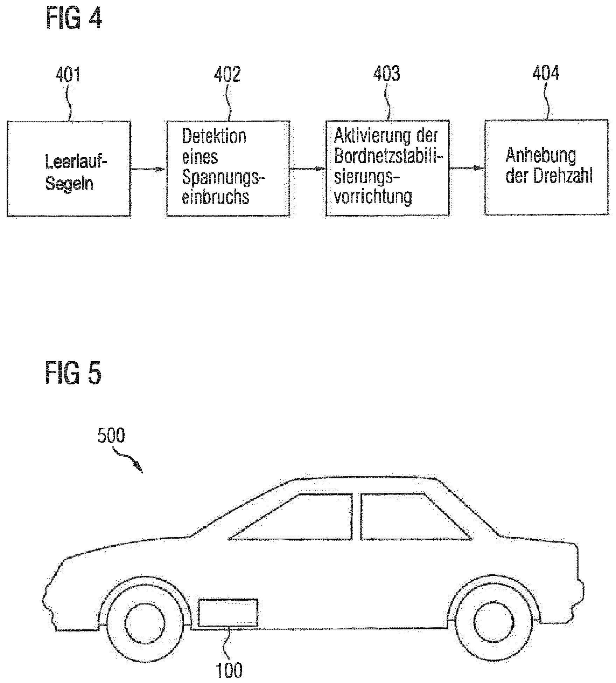

Fig. 4 zeigt ein Flussdiagramm für ein Verfahren zur Stabilisierung eines Bordnetzes. In einem ersten Schritt 401 befindet sich das Fahrzeug in einer Leerlaufsegel-Phase und der Verbrennungsmotor wird mit einer Leerlaufdrehzahl betrieben, womit auch die Generatorleistung reduziert ist. In Schritt 402 wird ein Spannungseinbruch im Bordnetz durch die Sensoranordnung detektiert, dieser wird dadurch verursacht, dass die Last im Bordnetz größer ist als die Generatorleistung und gleichzeitig die Batterie keine Leistung in das Bordnetz abgibt. In Schritt 403 wird die Bordnetzstabilisierungsvorrichtung aktiviert, das Bordnetz wird hierdurch gestützt und es wird eine Bezugsspannung für die Generatorregelung vorgegeben. Im letzten Schritt 404 wird die Drehzahl des Verbrennungsmotors und damit die Generatordrehzahl angehoben, um mehr elektrische Leistung durch den Generator bereitzustellen. Dies kann erfolgen, indem das Leerlaufsegeln beendet wird.

Fig. 5 zeigt ein Fahrzeug 500 mit einer Bordnetzstabilisierungsvorrichtung 100. Des Weiteren weist das Fahrzeug 500 einen Generator 120 und eine Batterie auf.

## Patentansprüche

1. Bordnetzstabilisierungsvorrichtung (100) für ein Fahrzeug mit einer Fahrzeugbatterie und einem Verbrennungsmotor,
welche:
- einen elektrischen Energiespeicher (110) zum Versorgen eines Bordnetzes des Fahrzeuges mit elektrischer Energie;
- eine Sensoreinrichtung (130) zum Detektieren eines Spannungseinbruchs im Bordnetz;
- sowie eine Steuereinheit aufweist, die,
wenn während eines Leerlaufsegelzustandes des Fahrzeugs, in dem das Bordnetz des Fahrzeuges durch einen vom Verbrennungsmotor angetriebenen Generator und die Fahrzeugbatterie gespeist wird, ein Spannungseinbruch aufgrund eines Ausfalls der Fahrzeugbatterie oder einer Trennung der Fahrzeugbatterie vom Bordnetz durch die Sensoreinrichtung detektiert wurde, und die vom Bordnetz geforderte Leistung (140) größer ist als die durch den Generator (120) gelieferte Leistung,
zum Hochregeln einer Drehzahl des Verbrennungsmotors eingerichtet ist;
wobei die Bordnetzstabilisierungsvorrichtung (100) außerdem eingerichtet ist, Energie aus dem elektrischen Energiespeicher (110) in das Bordnetz einzuspeisen bis die Drehzahl des Verbrennungsmotors erhöht wurde,
wobei der Energiespeicher (110) ausgeführt ist, eine Bezugsspannung für eine Regelung des Generators bereitzustellen.

2. Bordnetzstabilisierungsvorrichtung (100) gemäß Anspruch 1,
wobei der elektrische Energiespeicher (110) einen Kondensator aufweist.

3. Bordnetzstabilisierungsvorrichtung (100) gemäß einem der vorhergehenden Ansprüche,
wobei der Energiespeicher (110) wenigstens einen Akkumulator aufweist.

4. Bordnetzstabilisierungsvorrichtung (100) gemäß einem der vorhergehenden Ansprüche,
wobei der Energiespeicher (110) wenigstens einen Energieinhalt aufweist um das Bordnetz bis zum Hochregeln des Generators zu stützen.

5. Fahrzeug (500) mit einer
Bordnetzstabilisierungsvorrichtung (100) gemäß einem der vorhergehenden Ansprüche.

6. Verfahren zur Bordnetzstabilisierung eines Fahrzeuges (500) in einer Leerlaufsegelphase, wobei ein Verbrennungsmotor des Fahrzeuges von einem Antriebsstrang des Fahrzeuges abgekuppelt ist und mit einer Drehzahl betrieben wird,
und ein Bordnetz des Fahrzeuges durch einen vom Verbrennungsmotor angetriebenen Generator und eine Fahrzeugbatterie gespeist wird;
mit den Schritten:
- Detektieren (402) eines Spannungseinbruchs im Bordnetz aufgrund eines Ausfalls der Fahrzeugbatterie oder einer Trennung der Fahrzeugbatterie vom Bordnetz, durch eine Sensoranordnung;
- Einspeisen (403) von in einem elektrischen Energiespeicher gespeicherter elektrischer Energie in das Bordnetz bis die Drehzahl des Verbrennungsmotors so weit erhöht wurde, dass der Generator eine ausreichende Drehzahl hat, um das Bordnetz allein zu versorgen, und Vorgabe einer Bezugsspannung für eine Regelung des Generators; und
- Erhöhen (404) der Drehzahl des Verbrennungsmotors, um eine höhere Leistung durch den Generator bereitzustellen.

7. Verfahren zur Bordnetzstabilisierung eines Fahrzeuges gemäß Anspruch 6,
wobei die Drehzahl des Verbrennungsmotors in der Leerlaufsegelphase eine Leerlaufdrehzahl ist.

8. Verfahren gemäß einem der Ansprüche 6 bis 7, mit dem weiteren Schritt:
- Beenden des Leerlaufsegelns, wenn ein Spannungseinbruch im Bordnetz detektiert wurde.

9. Verfahren gemäß einem der Ansprüche 6 bis 8, mit dem weiteren Schritt:
- Reduzieren variabler Lasten im Bordnetz, wenn ein Spannungseinbruch im Bordnetz detektiert wurde.

10. Computerprogrammelement, das, wenn es auf einem Steuergerät eines Fahrzeugs ausgeführt wird, das Fahrzeug anleitet, die Schritte des Verfahrens gemäß einem der Ansprüche 6 bis 9 durchzuführen.

11. Computerlesbares Medium, auf dem ein Programmelement gemäß Anspruch 10 gespeichert ist.

12. Fahrzeug mit einer Steuereinrichtung mit einer Prozessoreinheit, die dazu eingerichtet ist, die Schritte des Verfahrens gemäß einem der Ansprüche 6 bis 9 durchzuführen.

## Claims

1. On-board electrical system stabilization apparatus (100) for a vehicle having a vehicle battery and an internal combustion engine,
which comprises:
- an electrical energy store (110) for supplying electrical energy to an on-board electrical system of the vehicle;
- a sensor device (130) for detecting a voltage dip in the on-board electrical system;
- and a controller which, when a voltage dip due to failure of the vehicle battery or disconnection of the vehicle battery from the on-board electrical system has been detected by the sensor device during an idle sailing state of the vehicle, in which state the on-board electrical system of the vehicle is fed by a generator, which is driven by the internal combustion engine, and the vehicle battery, and the power (140) demanded by the on-board electrical system is greater than the power delivered by the generator (120), is designed to adjust a rotation speed of the internal combustion engine upward;
wherein the on-board electrical system stabilization apparatus (100) is also designed to feed energy from the electrical energy store (110) into the on-board electrical system until the rotation speed of the internal combustion engine has been increased, wherein the energy store (110) is designed to provide a reference voltage for controlling the generator.

2. On-board electrical system stabilization apparatus (100) according to Claim 1,
wherein the electrical energy store (110) comprises a capacitor.

3. On-board electrical system stabilization apparatus (100) according to either of the preceding claims, wherein the energy store (110) comprises at least one rechargeable battery.

4. On-board electrical system stabilization apparatus (100) according to one of the preceding claims,
wherein the energy store (110) comprises at least one energy content in order to assist the on-board electrical system until the generator is adjusted upwards.

5. Vehicle (500) comprising an on-board electrical system stabilization apparatus (100) according to one of the preceding claims.

6. Method for on-board electrical system stabilization of a vehicle (500) in an idle sailing phase, wherein
an internal combustion engine of the vehicle is decoupled from a drive train of the vehicle and is operated at a rotation speed,
and an on-board electrical system of the vehicle is fed by a generator, which is driven by the internal combustion engine, and a vehicle battery;
comprising the steps of:
- detecting (402) a voltage dip in the on-board electrical system due to failure of the vehicle battery or disconnection of the vehicle battery from the on-board electrical system, by a sensor arrangement;
- feeding (403) electrical energy stored in an electrical energy store into the on-board electrical system until the rotation speed of the internal combustion engine has been increased to such an extent that the generator has a sufficient rotation speed to supply power to the on-board electrical system on its own, and prespecifying a reference voltage for controlling the generator; and
- increasing (404) the rotation speed of the internal combustion engine in order to provide a higher power by the generator.

7. Method for on-board electrical system stabilization of a vehicle according to Claim 6,
wherein the rotation speed of the internal combustion engine in the idle sailing phase is an idling rotation speed.

8. Method according to either of Claims 6 and 7, comprising the further step of:
- ending the idle sailing when a voltage dip in the on-board electrical system has been detected.

9. Method according to one of Claims 6 to 8, comprising the further step of:
- reducing variable loads in the on-board electrical system when a voltage dip in the on-board electrical system has been detected.

10. Computer program element which, when it is executed on a control unit of a vehicle, instructs the vehicle to carry out the steps of the method according to one of Claims 6 to 9.

11. Computer-readable medium, in which a program element according to Claim 10 is stored.

12. Vehicle comprising a control device having a processor unit which is designed to carry out the steps of the method according to one of Claims 6 to 9.

## Revendications

1. Dispositif de stabilisation de réseau de bord (100) pour un véhicule comprenant une batterie de véhicule et un moteur à combustion, qui présente :
- un accumulateur d'énergie électrique (110) pour alimenter en énergie électrique un réseau de bord du véhicule ;
- un dispositif capteur (130) pour détecter une baisse de tension dans le réseau de bord ;
- ainsi qu'une unité de commande qui est aménagée pour régler vers le haut la vitesse de rotation du moteur à combustion si pendant un état de déplacement sur son élan au ralenti du véhicule, dans lequel le réseau de bord du véhicule est alimenté par un générateur entraîné par le moteur à combustion et la batterie de véhicule, une baisse de tension a été détectée par le dispositif capteur en raison d'une panne de la batterie de véhicule ou d'une séparation de la batterie de véhicule du réseau de bord, et la puissance (140) demandée par le réseau de bord est supérieure à la puissance fournie par le générateur (120) ;
le dispositif de stabilisation de réseau de bord (100) étant en outre aménagé pour alimenter de l'énergie de l'accumulateur d'énergie électrique (110) dans le réseau de bord jusqu'à ce que la vitesse de rotation du moteur à combustion ait été augmentée, l'accumulateur d'énergie (110) étant réalisé pour fournir une tension de référence pour une régulation du générateur.

2. Dispositif de stabilisation de réseau de bord (100) selon la revendication 1, dans lequel l'accumulateur électrique (110) présente un condensateur.

3. Dispositif de stabilisation de réseau de bord (100) selon l'une quelconque des revendications précédentes, dans lequel l'accumulateur d'énergie (110) présente au moins un accumulateur.

4. Dispositif de stabilisation de réseau de bord (100) selon l'une quelconque des revendications précédentes, dans lequel l'accumulateur d'énergie (110) présente au moins un contenu en énergie pour assister le réseau de bord jusqu'au réglage vers le haut du générateur.

5. Véhicule (500), comprenant un dispositif de stabilisation de réseau de bord (100) selon l'une quelconque des revendications précédentes.

6. Procédé de stabilisation de réseau de bord d'un véhicule (500) dans une phase de déplacement sur son élan au ralenti, dans lequel
un moteur à combustion du véhicule est découplé d'une chaîne cinématique du véhicule et fonctionne à une vitesse de rotation,
et un réseau de bord du véhicule est alimenté par un générateur entraîné par le moteur à combustion et une batterie de véhicule ;
comprenant les étapes consistant à :
- détecter (402) par un agencement de capteur une baisse de tension dans le réseau de bord sur la base d'une panne de la batterie de véhicule ou d'une séparation de la batterie de véhicule du réseau de bord ;
- alimenter (403) de l'énergie électrique stockée dans un accumulateur d'énergie électrique dans le réseau de bord jusqu'à ce que la vitesse de rotation du moteur à combustion ait été augmentée à tel point que le générateur présente une vitesse de rotation suffisante pour alimenter seul le réseau de bord, et spécifier une tension de référence pour une régulation du générateur ; et
- augmenter (404) la vitesse de rotation du moteur à combustion pour fournir une puissance supérieure par le générateur.

7. Procédé de stabilisation de réseau de bord d'un véhicule selon la revendication 6, dans lequel la vitesse de rotation du moteur à combustion dans la phase de déplacement par son élan au ralenti est une vitesse de rotation au ralenti.

8. Procédé selon l'une quelconque des revendications 6 à 7, comprenant l'étape supplémentaire consistant à :
- terminer le déplacement par son élan au ralenti si une baisse de tension a été détectée dans le réseau de bord.

9. Procédé selon l'une quelconque des revendications 6 à 8, comprenant l'étape supplémentaire consistant à :
- réduire des charges variables dans le réseau de bord si une baisse de tension a été détectée dans le réseau de bord.

10. Elément de programme informatique qui, lorsqu'il est exécuté sur un appareil de commande d'un véhicule, ordonne au véhicule d'exécuter les étapes du procédé selon l'une quelconque des revendications 6 à 9.

11. Support lisible par ordinateur sur lequel est stocké un élément de programme selon la revendication 10.

12. Véhicule comprenant un dispositif de commande doté d'une unité de processeur qui est aménagée pour exécuter les étapes du procédé selon l'une quelconque des revendications 6 à 9.
